(19) Europäisches Patentamt
European Patent Office
Office européen des brevets

(11) EP 3 967 432 A1

(12) EUROPEAN PATENT APPLICATION
published in accordance with Art. 153(4) EPC

(43) Date of publication:
16.03.2022 Bulletin 2022/11

(51) Int Cl.:
B23B 51/02 (2006.01)    B23B 51/00 (2006.01)

(21) Application number: 20893462.0

(22) Date of filing: 16.04.2020

(86) International application number:
PCT/CN2020/085178

(87) International publication number:
WO 2021/103393 (03.06.2021 Gazette 2021/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.11.2019 CN 201911189475

(71) Applicant: Tec-Spiral Enterprises Tools Co., Ltd.
Songjiang, Shanghai 201613 (CN)

(72) Inventor: WANG, Hongjia
Shanghai 201612 (CN)

(74) Representative: Dilg, Haeusler, Schindelmann
Patentanwaltsgesellschaft mbH
Leonrodstraße 58
80636 München (DE)

(54) TWIST DRILL

(57) The present application discloses a twist drill, wherein a cone portion (11) is provided at a front end of a working portion (1) thereof, and an outer side surface of the working portion (1) is provided with a spiral flute (IV) configured to direct a flow of cutting chips to be discharged; an outer side surface of the cone portion (11) is provided, from a front end to a tail end, with multiple groups of composite cutting edges having diameters that increase successively in order, each group of composite cutting edges comprising adjacent major cutting edge (143) and minor cutting edge (144); the intersection point of the major cutting edge with the minor cutting edge is a tool nose (1411) of the composite cutting edge, and the tool noses (1411) of the composite cutting edges are distributed on the plurality of tapered spiral lines, wherein a drill tip top edge (II) is provided at an apex of the cone portion. When in use, the drill tip top edge can have the function of performing initial positioning, and a cutting process is completed by the drill tip top edge together with the multiple groups of composite cutting edges. A cutting force is dispersed on each cutting edge and a reaction force borne by each cutting edge is reduced correspondingly, such that few burrs appear on the cutting edges, such that it allows a smoother drilling process, and a higher drilling efficiency.

100
Fig. 7

**Description**

TECHNICAL FIELD

The present application relates to the technical field of metal cutting process and metal cutting tool, in particular, a twist drill.

BACKGROUND ART

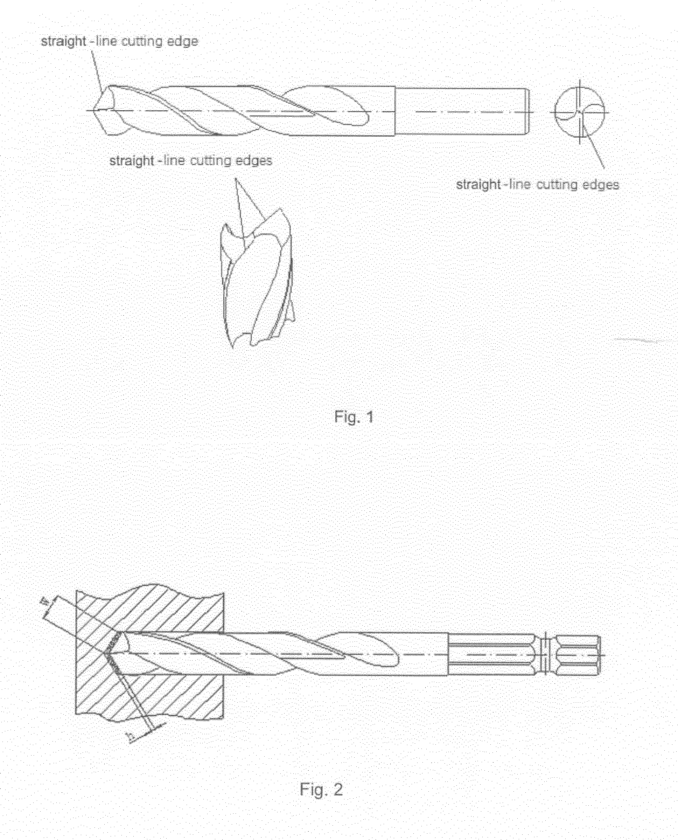

Fig. 1 is a schematic view of a conventionally structured twist drill. A perspective view of the twist drill is shown on a left side in an upper row of Fig. 1, a top view of a drill tip is shown on a right side of the upper row thereof, and a 3D perspective view of the partially truncated twist drill is shown in a lower row of Fig.1. Twist drills are mostly used in workplaces far away from other metal cutting machine tools such as drill presses. Hand-held electric tools are used for drilling operations. As limited by human arm strength, power of electric tools and so on, efficiency of the prior art twist drills in drilling is subject to great constraints, i.e., difficult positioning, slow speed, and low efficiency.

A machining and cutting process of the conventionally structured twist drill as shown in Fig.1, is analyzed and schematically shown in Fig. 2. When drilling, two symmetrically arranged straight line major cutting edges simultaneously complete the machining of a metal cutting volume of a corresponding size. The chip is a single piece (a cross-sectional area of the chip is large), such that it requires greater power for drilling, and at the same time, the two cutting edges thereof are subject to a reaction force that is also great, such that the cutting edges may be easily damaged.

Summary of the Invention

In order to solve the technical problems of difficult positioning, slow speed, and low efficiency of twist drills in the prior art, the present application proposes the following technical solutions.

The present application provides a twist drill, comprising a shank and a working portion connected thereto. The working portion includes a cone portion and a cylindrical portion fixedly connected thereto. An outer side surface of the working portion is provided with a spiral flute for directing a flow of cutting chips to be discharged, the spiral flute extending from a front end of the cone portion to the cylindrical portion.

An outer side surface of the cone portion is provided, from a front end to a tail end, with multiple groups of composite cutting edges having diameters that increase successively in order, each group of composite cutting edges being distributed on adjoining cutting surface and polishing surface.

A drill tip top edge is provided at an apex of the cone portion.

In some embodiments, flute sidewall top ends on both sides of the spiral flute are connected by a plurality of spiral lines.

A line segment where each cutting face intersects with a flute wall surface on each side of the spiral flute is a major cutting edge, and line segments where each cutting face intersects with the stepped cylindrical outer surface and with the spiral flute wall surface are minor cutting edges, an intersection point of the major cutting edge and the minor cutting edge is a tool nose of the composite cutting edge, and the tool noses of the composite cutting edges are distributed on the plurality of spiral lines.

In some embodiments, a major cutting edge flank face and a major cutting edge back are distributed (connected) respectively at a rear of the major cutting edge on each cutting face in a circumferential direction around an axis; a minor cutting edge flank face and a minor cutting edge back are distributed (connected) respectively at a rear of the minor cutting edge on each polishing face in a circumferential direction around an axis.

The major cutting edge, the minor cutting edge, and the tool nose constitute a unit composite edge, and a unit tooth corresponding to the unit composite edge is a triple-face prism composed of a rake face, a major cutting edge flank face, and a minor cutting edge flank face. The rake face is located in front of a groove in the spiral flute.

In some embodiments, each group of composite cutting edges are coaxial with the cone portion.

An angle of each group of composite cutting edges is determined according to a different linear velocity at a different diametric position of each group of composite cutting edges.

In some embodiments, an included angle between the spiral line and an axis of the cone (or cylinder) portion in an axial section projection is a spiral angle $\omega_0$, and the angle of each group of composite cutting edge includes:

a major deflection angle $K_r$ in a range of $10° \sim 80°$;

a minor deflection angle $K_r$ in a range of $0.5° \sim 5°$;

A normal back angle $\alpha_n$ in a range of $0.5° \sim 8°$;

A normal front angle $\gamma_n$ is determined by the side wall of the spiral flute and is different for each unit tooth, which angle is in a range of $-\gamma_n \sim +\gamma_n$;

An edge tilt angle As of the major cutting edge is determined collectively by the sidewall of the spiral flute and the major deflection angle $K_r$, and is different for each unit tooth, which angle is in a range of $-\lambda_s \sim +\lambda_s$:

An edge tilt angle $\lambda_{s'}$ of the minor cutting edge is determined collectively by the spiral angle $\omega_0$ and the minor deflection angle $K_{r'}$, and is different for each unit tooth, which angle is $+\lambda_{s'}$:

An axial edge tilt angle $\lambda_{zz}$ of the major cutting edge is determined collectively by a position of the sidewall of the spiral flute (i.e., a core thickness of the drill bit), the spiral angle and the major deflection angle $K_r$, and is different for each unit tooth, which angle is in a range of $-\lambda_{zz} \sim +\lambda_{zz}$;

An axial edge tilt angle $\lambda_{fz}$ of the minor cutting edge is determined collectively by the spiral angle $\omega_0$ and the minor deflection angle $K_r$, and is different for each unit tooth, which angle is $+\lambda_{fz}$;

An axial back angle $\alpha_{wz}$ of the major cutting edge is determined collectively by the major cutting edge normal back angle $\alpha n$ and minor deflection angle $K_{r'}$, and is different for each unit tooth, which angle is $+\alpha_{wz}$;

In some embodiments, heights of the multiple groups of composite cutting edges arranged from the front end to the rear end on the outer side surface of the cone portion vary non-uniformly.

In some embodiments, the drill tip top edge comprises one chisel edge, two auxiliary edges, and two straight line major edges, One end of the two auxiliary edges is connected to the two straight line major edges, and another end thereof intersects the chisel edge.

In some embodiments, the cone portion is coaxial with the cylindrical portion, and a diameter of the group of composite cutting edges at the rearmost end of the cone portion is equal to a diameter of the cylindrical portion, a diameter of the cylindrical portion is a diameter of a drilling bore of the twist drill, and a core thickness of the drill tip top edge is smaller than a core thickness of the twist drill.

In some embodiments, a non-flute area of the cylindrical portion is a spiral edge back, and a connecting belt between the spiral flute and the spiral edge back is a spiral edge belt.

In some embodiments, a chip cross-sectional area of the nth group of composite major cutting edges is defined as Sn, a length of the major cutting edge of the nth group of composite cutting edges is defined as Wn, and a chip thickness of the nth group of composite cutting edges is defined as hn. Calculation equations of the chip cross-sectional area Sn of the composite cutting edges and the total chip cross-sectional area S of the twist drill are as follows:

A cross-sectional area of single flute single tooth chip is: S1 ... Si ... Sn; wherein:

$$S1 = W1 \times h1;$$

$$Si = Wi \times hi;$$

$$Sn = Wn \times hn;$$

A single flute total cutting area is: S = S1+...+Si+...+Sn:

A double flute total cutting area is: Sz = 2S = 2(S1+...+Si+...+Sn).

Wherein, W1 is a length of the drill tip major cutting edge;

Wherein, H1 is a length of the drill tip minor cutting edge;

h1 is a thickness of the chip on the drill tip major cutting edge, and: H1 > > h1 ;

Wi is a length of each major cutting edge of the composite cutting edge;

Hi is a length of each minor cutting edge of the composite cutting edge;

hi is a thickness of each major cutting edge of the composite cutting edge, and Hi > > hi;

The above-mentioned areas are each is the cross-sectional area of the chip, not the cutting area.

An embodiment of the present application discloses a twist drill, wherein a cone portion is provided at a front end of a working portion thereof, and an outer side surface of the working portion is provided with a spiral flute configured to direct a flow of cutting chips to be discharged; an outer side surface of the cone portion is provided, from a front end to a tail end, with multiple groups of composite cutting edges having diameters that increase successively in order, a drill tip top edge is provided at an apex of the cone portion. When in use, positioning is performed by the drill tip top edge, and a cutting process is completed by the drill tip top edge together with the multiple groups of composite cutting edges. Since diameters of the drill tip top edge and the multiple groups of composite cutting edges gradually increase from the tip to the tail, it can be said that a remaining volume of the workpiece being cut is appropriately distributed according to the diameter of the bore, a removed volume of the workpiece is gradually decomposed and cut, a cutting force is dispersed on each cutting edge and a reaction force borne by each cutting edge is reduced correspondingly, such that few burrs appear on the cutting edges, such that it allows a smoother drilling process, and a higher drilling efficiency. It can avoid occurrence of such a problem with the prior art twist drill that "when two symmetrically arranged straight line major cutting edges simultaneously complete the machining of a metal cutting volume of a corresponding size, it requires greater power for drilling, and at the same time, the two cutting edges thereof are subject to a reaction force that is also great, such that the cutting edges may be easily damaged.

BRIEF DESCRIPTION OF THE DRAWINGS

In order to more clearly describe the embodiments of the present application or the technical solutions in the prior art, drawings used in the description of the embodiments or the prior art will be briefly described below. Obviously, the drawings in the following description are only some embodiments of the present application. Those skilled in the art can obtain further drawings according to the structures shown in these drawings without any creative effort.

Figure 1 is a schematic view of a structure of the prior art twist drill;

Figure 2 is a schematic view of cutting of the edges when the prior art twist drill is drilling;

Figure 3 is a schematic view of a structure of the working portion of the twist drill according to an embodiment of the present application;

Figure 4 is a schematic view of the composite cutting edge at the tip of the twist drill (viewed in a direction K) according to an embodiment of the present application;

Figure 5 is a cross-sectional analysis of the relationship between the working surface and the cutting angle of the unit composite cutting edge of the twist drill according to an embodiment of the present application, and a schematic view of the cutting mechanism thereof;

Figure 6 is an enlarged schematic view of the top edge at the tip of the twist drill according to an embodiment of the present application;

Figure 7 is a schematic view of cutting of the edge when the twist drill according to an embodiment of the present application is drilling.

DETAILED DESCRIPTION OF PREFERRED EMBODIMENTS

With reference to the figures of the embodiments of the present application, a clear and complete description is given below for the technical solutions of the embodiments of the present application. Obviously, the embodiments described below are only part of the embodiments, rather than all of the embodiments. All other embodiments that can be obtained by a person skilled in the art based on the embodiments of the present application without any creative effort are included in the protection scope of the present application.

It should be noted that all the directional indications (such as up, down, left, right, front, back...) in the embodiments of the present application are only used to explain the relative positions, movement situation, etc. of the components in a specific posture (as shown in the accompanying drawings). If the specific posture changes, the directional indication will change accordingly.

Besides, in the present application, the terms "first", "second", and the like are used for descriptive purposes only and cannot be construed as indicating relative importance or indicating the number of technical features. Thus, features defined as "first", "second" may explicitly or implicitly include one or more of the features. In addition, technical solutions of various embodiments can be combined with each other, but it must be based on what can be achieved by a person of ordinary skill in the art. When the combination of technical solutions is contradictory or cannot be achieved, it should be considered that such a combination of technical solutions does not exist, nor does it fall within the scope of protection of the present application.

In the present application, unless otherwise clearly specified and defined, such terms as "connected", "coupled", "fixed", "secured" and so on should be understood in a broad sense, for example, it can be a fixed connection or it is a detachable connection, or an integral connection; it can be a mechanical connection or an electrical connection; it can be directly connected, or it can be indirectly connected through an intermediate medium, or it can be an internal communication between two components or interaction between two components, unless otherwise defined specifically. Those of ordinary skill in the art can understand the specific meanings of the above terms in the present application according to specific situations.

As shown in Figures 2-7, an embodiment of the present application provides a twist drill 100, which comprises a shank 2 and a working portion 1 connected to the shank 2. The working portion 1 comprises a cone (composite cutting edge group)) portion 11 and a flute cylindrical portion 12 fixedly connected to the cone (composite cutting edge group) portion 11 .

An outer side surface of the working portion 1 is provided with a spiral flute IV configured to direct a flow of cutting chips to be discharged, and the spiral flute IV is extended from a front end of the cone portion 11 to the flute cylindrical portion 12;

An outer side surface of the cone portion 11 is provided, from a front end to a tail end, with multiple groups of composite cutting edges having diameters that increase successively in order.

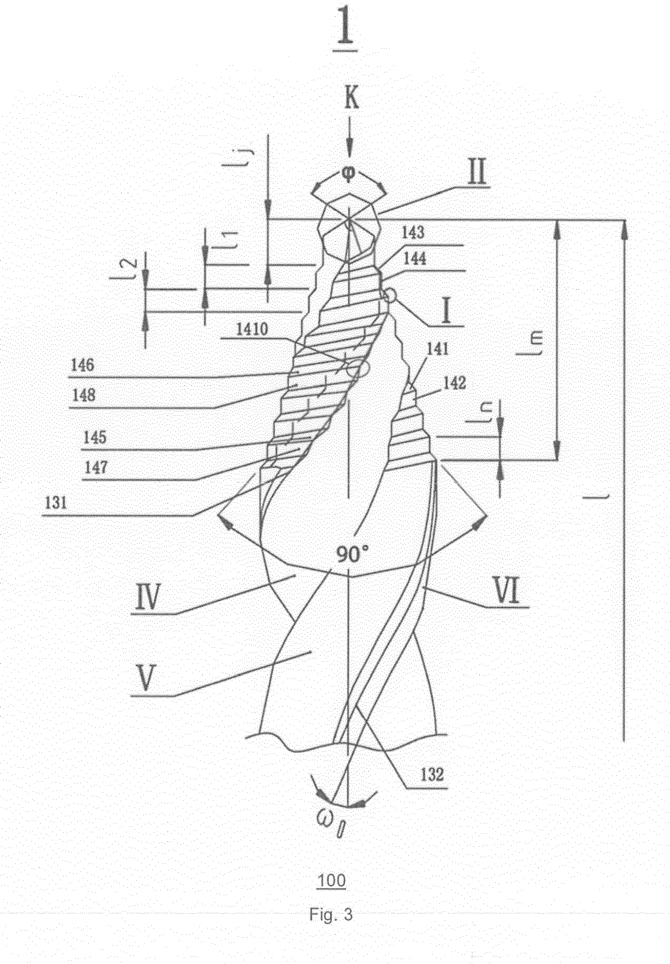

Each group of composite cutting edges includes adjacent common step (conical) surface 141 and common step (cylindrical) surface 142, as shown in Fig. 3.

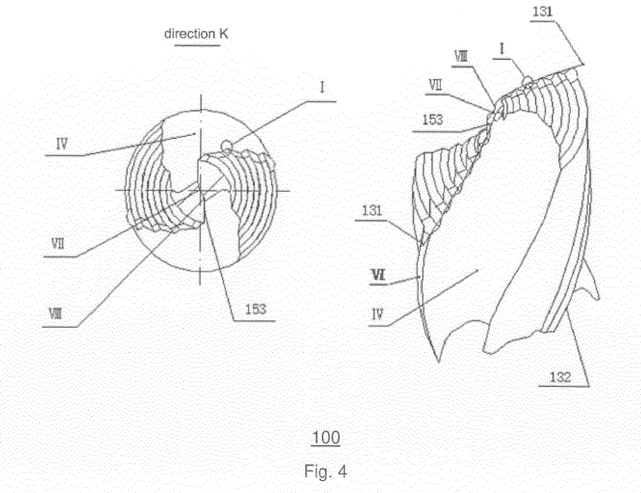

A drill tip top edge II is provided at an apex of the cone portion 11. It is designed thereon with: one chisel edge VII, two auxiliary edges VIII, and two straight line major cutting edges, as shown in Fig.4.

On the cone 11 portion , an inner front wall of the spiral flute IV intersects and is connected with the cone to define a plurality of spiral lines 131; on the flute cylinder 12 portion, the inner front wall of the spiral flute IV intersects and is connected to the cylindrical surface having the largest diameter to define as a flute (drill body) cylindrical spiral line 132, as shown in Figure 3 and Figure 4,

Further, a non-spiral flute IV area of the flute cylindrical portion 12 is a spiral edge back V, and the inner front wall of the spiral flute IV and the spiral edge back V have spiral edge belts VI having the same spiral angle and equal width.

Intersection of the common step (conical) surface 141 with the inner front wall of the spiral flute IV is the major cutting edge 143, and intersection of the common step (cylindrical) surface 142 with the inner front wall of the spiral flute IV is the minor cutting edge 144, and the intersection point of the major cutting edge 143 with the minor cutting edge 144 is a tool nose 1411 of the composite cutting edge, and the tool noses of the composite cutting edges are distributed on the plurality of spiral lines 131. The tool noses of the groups of composite cutting edges are distributed on the two conical spiral lines 131, and such a distribution is extremely important to efficiency, quality, power, etc. of the drilling process.

In Fig. 4, the left side is a top view of the twist drill 100, and the right side is a three-dimensional (3D) schematic view of the composite cutting edge. In particular, as shown in Fig. 4, there are two spiral lines 131, and the tool noses 1411 of the composite cutting edges are distributed on the two spiral lines 131 . Of course, 3,4, or 5 spiral wires 131 can also be designed according to the size of the drill core of the twist drill 100, which is not limited in the present application.

As shown in Fig. 3, at a rear of the major cutting edge 143 on the common step (cone) surface 141, there are connected the major cutting edge flank surface 145 and the major cutting edge (cone) back 146 in sequence; at a rear of the minor cutting edge 144 on the common step (cylindrical) surface 142, there are connected the minor cutting edge flank surface 147 and the minor cutting edge (cylindrical) back 148 in sequence;

The major cutting edge 143, the minor cutting edge 144, and the tool noses 1411 constitute a unit composite edge, as shown at I in Fig. 2 and Fig. 4, and a unit tooth 1410 corresponding to the unit composite edge is a triple-face prism composed of a rake face 133, a major cutting edge 143 flank face 145, and a minor cutting edge 144 flank face 147. The rake face 133 is a surface of the side wall connecting the major cutting edge 143 and the minor cutting edge 144 in the spiral flute IV, which can also be said as a front face of the flute in the spiral flute IV.

A plane where the major cutting edge back 146 is located can be approximately regarded as an inclined surface or a conical side surface, and the major cutting edge back 146 is called as the major cutting edge (cone) back. The minor cutting edge back 148 can be approximately regarded as the minor cutting edge (cylindrical) back. Although an axial tilt angle of the minor cutting edge is not of 0 degrees, there is a certain chamfer, and a plane where the minor cutting edge back 148 is located can be approximately regarded as a cylindrical surface.

Further, each group of composite cutting edges are coaxial with the cone portion; an angle of each group of composite cutting edges is determined according to a different linear velocity at a different diametric position of each group of composite cutting edges.

Referring to Figure 3, annotations are explained as follows:

| | |
|---|---|
| IV-twist drill spiral flute. | V-twist drill spiral edge back. |
| VI-twist drill spiral edge belt. | $\omega_0$-twist drill spiral angle. |

$\varphi$-twist drill peak (top) angle, which usually takes a value of 118° ~ 135°.

An included angle between the spiral line 131 and an axis of the cone portion 11 (or overall drill bit) portion in an axial section projection is a spiral angle $\omega_0$.

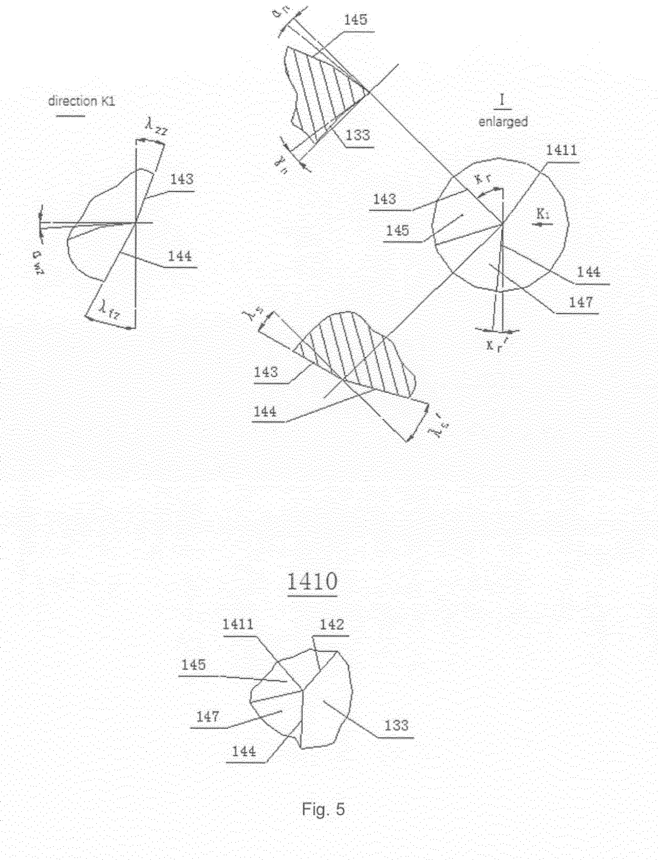

Figure 5 is a schematic view of cross-sectional analysis of the relationship between the working surface and the cutting angle of the unit composite cutting edge I of the twist drill 100, and the cutting mechanism thereof. Referring to Figure 5, an angle of each group of composite cutting edges includes:

a major deflection angle $K_r$ in a range of 10° ~ 80°;

a minor deflection angle $K_{r'}$ in a range of 0.5° ~ 5°;

a normal back angle $\alpha_n$ in a range of 0.5° ~ 8°;

a normal front angle $\gamma_n$ is determined by the side wall of the spiral flute IV and is different for each unit tooth, which angle is in a range of $-\gamma_n$ ~ $+\gamma_n$.

An edge tilt angle $\lambda_s$ of the major cutting edge 143 is determined collectively by a position of the sidewall of the spiral flute IV (i.e., a core thickness of the drill bit) and the major deflection angle $K_r$, and is different for each unit tooth due to a different position (axial and radial direction) thereof, which angle is in a range of $-\lambda_s$ ~ $+\lambda_s$;

An edge tilt angle $\lambda_s$ of the minor cutting edge 144 is determined collectively by the spiral angle $\omega_0$ and the minor deflection angle $K_{r'}$, and is different for each unit tooth due to a different position (axial and radial direction) thereof, which angle is $+\lambda_{s'}$;

A axial edge tilt angle $\lambda_{zz}$ of the major cutting edge 143 is determined collectively by a position of the sidewall of the spiral flute IV (i.e., a core thickness of the drill bit), the spiral angle and the major deflection angle $K_r$, and is also different for each unit tooth, which angle is in a range of $-\lambda_{zz}$ ~ $+\lambda_{zz}$;

An axial edge tilt angle $\lambda_{fz}$ of the minor cutting edge 144 is determined collectively by the spiral angle $\omega_0$ and the minor deflection angle $K_{r'}$, and is also different for each unit tooth, which angle is can only be $+\lambda_{fz}$;

An axial back angle $\alpha_{wz}$ of the major cutting edge is determined collectively by the major cutting edge 143 normal back angle $\alpha_n$ and the major deflection angle $k_r$ and the minor deflection angle $K_{r'}$, and is also different for each unit tooth, which angle can only be $+\alpha_{wz}$;

A group of composite cutting edges is also called as a unit composite edge I. A unit composite edge I is composed of a major cutting edge 143 + a minor cutting edge 144 + a tool nose 1411. The unit tooth 1410 is a three-face (prismatic) body composed of a rake face 133 (front face of the twist drill flute) + a major cutting edge flank face 145 + a minor cutting edge flank face 147.

Optionally, diameters of the multiple groups of composite cutting edges on the outer side of the cone portion 11 from the front end to the tail end are increased in sequence. In some embodiments, diameters of the multiple groups of composite cutting edges become larger uniformly or non-uniformly in sequence. For example, the diameter of the composite cutting edge of the next stage is 1mm larger than the diameter of that of the previous stage, or 50 threads larger, so far as it is designed according to the size of the drill core of the twist drill, the size and depth of the bore, the material to be processed, the condition of the utility tool, etc., which is not limited in the present application.

Further, heights of the multiple groups of composite cutting edges arranged from the front end to the rear end on the outer side surface of the cone portion 11 vary uniformly or non-uniformly. In Figure 3, $l_1$, $l_2$, $l_3$...$l_n$ refer to the height of each composite cutting edge. Wherein, the $L_1$ length portion is the composite drill tip. Wherein, the $l_j$ length portion

is the drill tip; the $l_1$, $l_2$, $l_3$...$l_n$ length portions are heights of the corresponding composite cutting edge groups. The total length of the cone portion 11 of the twist drill 100 is $L_1$, and the total length of the twist drill 100 is L. Particularly, it is possible that In is greater than, less than or equal to $l_{n-1}$, which can be designed according to the type of drilling required and the required performance.

The characteristics of such a cutter tooth are: better cutting strength; easy to design and an appropriate cutting angle; and a wider range of adaptability.

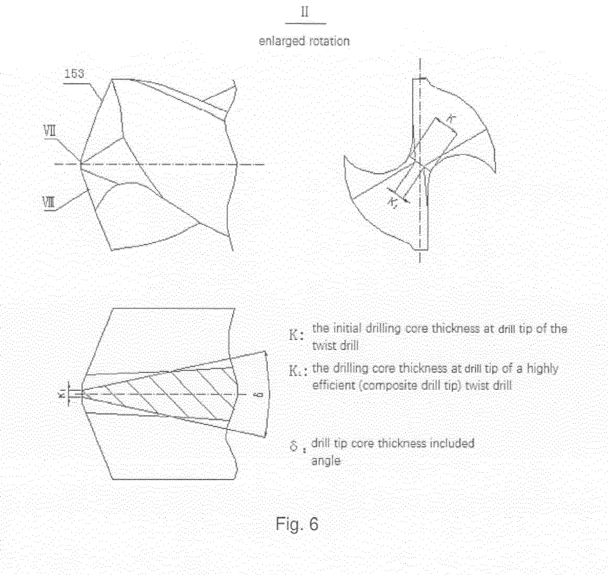

Figure 6 is an enlarged schematic view of the top edge II at the tip of the twist drill 100. The left side of the upper row is the enlarged front view of II in Fig. 3, the right side is the enlarged left view of II in Fig.3, and the lower row is the enlarged top sectional view of II in Fig. 3, for the convenience of making a comparison of the core thickness. As shown in Figures 4 and 6, the top edge II of the drill tip comprises one chisel edge VII, two auxiliary edges VIII, and two straight line major edges 153. One end of the two auxiliary edges VIII is connected with the two straight line major edges 153, and the other end intersects with the chisel edge VII, such that a length of the initial chisel edge of the drill is shortened to reduce an axial resistance of the drill during drilling.

That is, as shown in Figure 4, the top edge II of the drill tip is composed of one chisel edge VII + two minor edges VIII + two straight line major edges 153. Multiple groups ($l_1$, $l_2$, $l_3$...$l_n$) of composite cutting edges ( I ) extend axially (toward the shank of the twist drill 100) along the two tapered spiral lines 131 (as shown in Figure 3 and Figure 4) to the two spiral edges VI of the cylindrical portion 12 of the twist drill 100 in such a manner as to form a complete twist drill working portion 1.

In some embodiments, the cone portion 11 is coaxial with the cylindrical portion 12, and a diameter of the group of composite cutting edges at the rearmost end of the cone portion 11 is equal to a diameter of the cylindrical portion 12, a diameter of the cylindrical portion 12 is a diameter of a final drilling bore of the core thickness of the twist drill 100, and a core thickness of the drill tip top edge II is smaller than a core thickness of the twist drill. The bottom line in Figure 6 is the core thickness comparison view in which annotations are as follows:

K:     the initial core thickness at the tip of the twist drill;

$K_1$:    the core thickness at the tip of a high-efficiency (composite drill tip) twist drill;

$\delta$:     the included grinding angle of the drill tip core thickness.

Twist drills have standards at home and abroad, wherein determined requirements are set forth for their core size, a numerical value of which is determined by its outer diameter value. When the outer diameter of the drill bit is larger (in the case of operating by using a hand tool), the twist drill in the prior art as illustrated in Figure 1 has a larger drill core thickness and a larger chisel edge value, such that there is a larger axial resistance and when drilling, the drilling is more time-consuming and laborious, and it is not easy to position.

In view of the above two aspects: the number of composite edges should be as many as possible, and the diameter of the first group should be as small as possible; but at the same time, the reduction of the diameter of the first group is restricted by the core thickness of the drill itself. As so, the design thereof should take into account the value of the core thickness of the drill bit as specified in the basic standards as much as possible. For a large diameter, it requires reducing the cutting force as more as possible and having a good positioning performance. When the first group has a diameter that is smaller than a core thickness of itself, in needs to extend the time for the step of grinding with the chisel edge so as to reduce the core thickness at the drill tip. According to the embodiment of the present application, the core thickness $K_1$ of the drill tip top edge II is much smaller than the initial core thickness K at the tip of the twist drill, so that the centering of the drill tip is easy and accurate.

For the twist drill in the prior art as illustrated in Figure 1, two symmetrically arranged straight line major cutting edges 153 simultaneously complete the processing of the metal cutting volume of a corresponding size, with a single flute cutting area: $S1=S2=W\times h$; and a total cutting area of two flutes:

$$S=2S1=2S2=2\times W\times h.$$

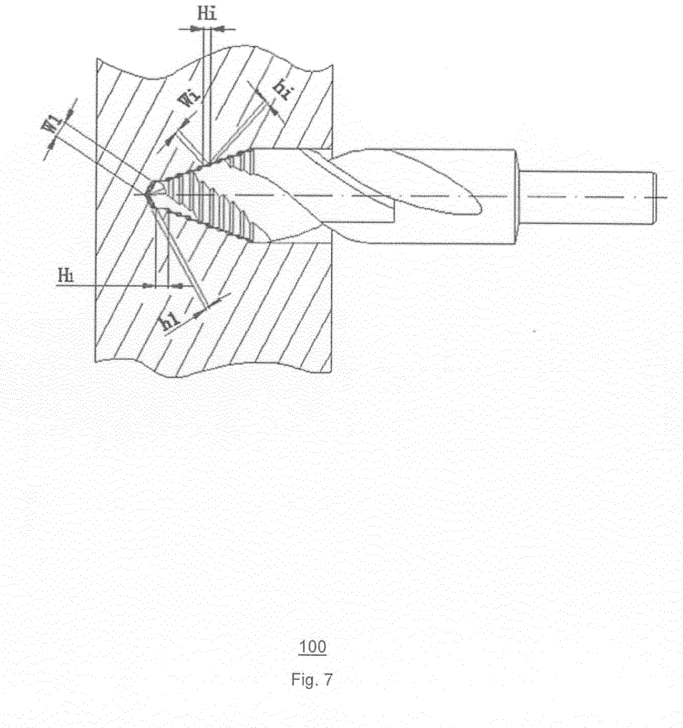

In some embodiments of the present application, the shank of the twist drill 100 has various forms, such as a round shank as shown in Fig. 1, a hexagonal shank, etc. Here, taking the schematic view of Fig. 7 showing cutting of the cutting edge of a round shank twist drill 100 when drilling, as an example, parameters of the drill tip top edge II and each composite cutting edge are given.

A chip cross-sectional area of the nth group of composite major cutting edges is defined as Sn, a length of the major cutting edge 143 of the nth group of composite cutting edges is defined as Wn, and a chip thickness of the nth group of composite cutting edges is defined as hn. Calculation equations of the chip cross-sectional area Sn of the composite cutting edges and the total chip cross-sectional area S of the twist drill are as follows:

A cross-sectional area of single flute single tooth chip is: S1 ...Si ...Sn; wherein:

$$S1 = W1 \times h1;$$

$$Si = Wi \times hi;$$

$$Sn = Wn \times hn;$$

A single flute total cutting area is: S = S1+...+Si+...+Sn;

A double flute total cutting area is: Sz = 2S = 2(S1+...+Si+...+Sn),

Wherein, W1 is a length of the drill tip major cutting edge;

Wherein, H1 is a length of the drill tip minor cutting edge;

h1 is a thickness of the chip on the drill tip major cutting edge, and: H1 > > h1;

Wi is a length of each major cutting edge of the composite cutting edge;

Hi is a length of each minor cutting edge of the composite cutting edge;

hi is a thickness of the chip on each major cutting edge of the composite cutting edge, and Hi> > hi;

As shown in Fig. 7:

1. The major cutting edge length at the drill tip is W1, and W1≥Wi. which is much smaller than the cutting edge length W of a conventional twist drill, dispersing the width of the cutting layer ↓;

2. The cutting thickness at the drill tip is h1, and h1=hi, which is greater than or equal to the cutting layer thickness h of a conventional twist drill, which increases the feed (that is, the feed speed) ↑;

3. The length of the minor cutting edge at the drill tip is H1, and H1>Hi;

4. Each major cutting edge length of the composite cutting edge at the drill tip is Wi, and Wi<W1, which is much smaller than the cutting edge length W of a conventional twist drill, dispersing the width of the cutting layer ↓;

5. Each cutting layer chip thickness of the composite edge is hi, and hi=h1, which is greater than or equal to the cutting layer thickness h of a conventional twist drill, increasing the feed (that is, the feed speed) ↑;

6. Hi is a length of each minor cutting edge of the composite cutting edge, and Hi < H1;

7. Each minor cutting edge of the composite cutting edge has a determined axial minor deflection angle (also called as a backlash angle), only serving to polish (not cutting) the machined surface, improving the surface quality↑.

A total removed volume of the workpiece is gradually decomposed and cut such that the initial large chip is turned into small chips, a cutting force is dispersed on each cutting edge and a reaction force borne by each cutting edge is reduced correspondingly, such that few burrs appear on the cutting edges, such that it allows a smoother drilling process, and a higher drilling efficiency.

In the manufacture, the chisel edge of the conventional twist drill (as in the prior art illustrated in Figure 1) is ground by 80% to 90%, and two auxiliary (inner) edges are formed. The rake angle of the auxiliary (inner) edge is increased from approximately -60° to 0° ~ -10°, such that the axial resistance is reduced by more than 50%, such that the axial feed of the twist drill 100 is easy and fast, which greatly reduces the compressing force and cutting heat at the chisel edge at the drill tip.

After the axial force condition is improved, the centering accuracy is greatly improved, and multiple groups of composite cutting edges can achieve multilevel centering, which greatly improves the smoothness, roundness, and accuracy of the bore.

Moreover, multiple groups of composite cutting edges can split chips in multiple segments, and the volume of metal removed can be split in multiple segments, so that the chip width is narrow, such that the chip is separated, allowing smooth chip discharge. According to a different linear speed at a different diameter position of each group of composite cutting edges, the angle of the composite cutting edge is appropriately designed to greatly reduce the torque resistance, reduce the generation and accumulation of cutting heat, reduce the wear of the cutting edge, improve the uneven degree of wear caused by different cutting speeds of the cutting edge at different positions, so as to obtain easier drilling and cutting, greatly increased drilling efficiency, and greatly extended service life of the drill bit.

To sum up, an embodiment of the present application discloses a twist drill 100, wherein a cone portion 11 is provided at a front end of a working portion 1 thereof, and an outer side surface of the working portion 1 is provided with a spiral flute IV configured to direct a flow of cutting chips to be discharged; an outer side surface of the cone portion 11 is provided, from a front end to a tail end, with multiple groups of composite cutting edges having diameters that increase successively in order, a drill tip top edge II is provided at an apex of the cone portion 11. When in use, positioning is performed by the drill tip top edge II, and a cutting process is completed by the drill tip top edge II together with the multiple groups of composite cutting edges. Since diameters of the drill tip top edge II and the multiple groups of composite cutting edges gradually increase from the tip to the tail, it can be said that a remaining volume of the workpiece being cut is appropriately distributed according to the diameter of the bore. In the whole machining process, the drilling force is small, uniform and reasonable, a removed volume of the workpiece is gradually divided and cut, a cutting force is dispersed on each cutting edge and a reaction force borne by each cutting edge is reduced correspondingly, and the manual hand-held electric tool is more stable and can be operated for a long time, such that few burrs appear on the cutting edges, such that it allows a smoother drilling process, and a higher drilling efficiency. It ensures drilling accuracy, avoids equipment and personal accidents; edges at different stages of the tool wear uniformly and consistently, extending tool service life; reducing tool unnecessary damage and workpiece scrap during use; reducing processing difficulty and costs, improving the processing efficiency.

The above are only preferred embodiments of the present application, which do not limit the protection scope of the present application. Under the concept of the present application, equivalent structural variations made with the contents of the description and drawings of the present application, or those directly/indirectly applied to other related technical fields, are all included in the scope of patent protection of the present application.

**Claims**

1. A twist drill, comprising a shank and a working portion connected with the shank, **characterized in that** the working portion includes a composite cutter working portion and a cylindrical portion fixedly connected with the working portion, and an outer side surface of the working portion is provided with a spiral flute for directing a flow of cutting chips to be discharged, the spiral flute extending from a front end of the composite cutter working portion to the cylindrical portion;
an outer side surface of the composite cutter working portion is provided, from a front end to a tail end, with multiple groups of composite cutting edges having diameters that increase successively in order, each group of composite cutting edges comprising adjacent first cutting face and second cutting face; and a drill tip top edge is provided at an apex of the composite cutter working portion.

2. The twist drill according to claim 1, **characterized in that** flute sidewall top ends on both sides of the spiral flute are connected by a plurality of spiral lines;
a line segment where each cutting face intersects with a flute wall surface on each side of the spiral flute is a major cutting edge, and line segments where each cutting face intersects with the stepped cylindrical outer surface and with the spiral flute wall surface are minor cutting edges, wherein intersection point of the major cutting edge and the minor cutting edge is a tool nose of the composite cutting edge, and the tool noses of the composite cutting edges are distributed on the plurality of tapered spiral lines.

3. The twist drill according to claim 2, **characterized in that** a major cutting edge flank face and a major cutting edge back are distributed respectively at a rear of the major cutting edge on each cutting face in a circumferential direction around an axis; a minor cutting edge flank face and a minor cutting edge back are distributed respectively at a rear of the minor cutting edge on each polishing face in a circumferential direction around an axis;
the major cutting edge, the minor cutting edge, and the tool nose constitute a unit composite edge, and a unit tooth corresponding to the unit composite edge is a triple-face prism composed of a rake face, a major cutting edge flank face, and a minor cutting edge flank face, and the rake face is located in front of a groove in the spiral flute,

4. The twist drill according to claim 2, **characterized in that** each group of composite cutting edges are coaxial with the composite cutter working portion; and
an angle of each group of composite cutting edges is determined according to a different linear velocity at a different diametric position of each group of composite cutting edges.

5. The twist drill according to claim 4, **characterized in that** an included angle between the spiral line and an axis of the cone portion is a spiral angle $\omega_0$, and an angle of each group of composite cutting edge includes:

a major deflection angle $K_r$ in a range of 10° ~ 80°;
a minor deflection angle $K_{r'}$ in a range of 0.5° ~ 5°;
a normal back angle $\alpha_n$ in a range of 0.5° ~ 8°;
a normal front angle $\gamma_n$ that is determined by a side wall of the spiral flute, which angle is in a range of $-\gamma_n$ ~ $+\gamma_n$, and is different for each unit tooth;
an edge tilt angle $\lambda_s$ of the major cutting edge that is determined collectively by the sidewall of the spiral flute and the major deflection angle $K_r$, which angle is in a range of $-\lambda_s$ ~ $+\lambda_s$, and is different for each unit tooth;
an edge tilt angle $\lambda_s$ of the minor cutting edge that is determined collectively by the spiral angle $\omega_0$ and the minor deflection angle $K_{r'}$, which angle in a value of $+\lambda_{s'}$, and is different for each unit tooth;
an axial edge tilt angle $\lambda_{zz}$ of the major cutting edge that is different for each unit tooth, determined collectively by a position of the sidewwall of the spiral flute, the spiral angle $\omega_0$ and the major deflection angle $K_r$, which angle is in a range of $-Azz$ ~ $+\lambda_{zz}$, and is different for each unit tooth;
an axial edge tilt angle $\lambda_{fz}$ of the minor cutting edge that is determined collectively by the sprial angle $\omega_0$ and the minor deflection angle $K_{r'}$, which angle is in a value of $+\lambda_{fz}$, and is different for each unit tooth;
an axial back angle $\alpha_{wz}$ of the major cutting edge that is determined collectively by the major cutting edge normal back angle $\alpha_n$ and minor deflection angle $K_{r'}$, which angle is in a value of $+\alpha_{wz}$, and is different for each unit tooth.

6. The twist drill according to claim 1, **characterized in that** heights of the multiple groups of composite cutting edges arranged from a front end to a rear end on the outer side surface of the composite cutter working portion vary non-uniformly.

7. The twist drill according to claim 1, **characterized in that** the drill tip top edge comprises one chisel edge, two auxiliary edges, and two straight line major edges, wherein one end of the two auxiliary edges is connected to the two straight line major edges, and another end thereof intersects the chisel edge.

8. The twist drill according to claim 1, **characterized in that** the composite cutter working portion is coaxial with the cylindrical portion, wherein a diameter of the group of composite cutting edges at the rearmost end of the composite cutter working portion is equal to a diameter of the cylindrical portion, a diameter of the cylindrical portion is a diameter of a drilling bore of the twist drill, and a core thickness of the drill tip top edge is smaller than a core thickness of the twist drill.

9. The twist drill according to claim 1, **characterized in that** a non-ffute area of the cylindrical portion is a spiral edge back, and a connecting belt between the spiral flute and the spiral edge back is a spiral edge belt.

10. The twist drill according to claim 1, **characterized in that** a chip cross-sectional area of the major cutting edge of the nth group of composite major cutting edges is defined as Sn, a length of the major cutting edge of the nth group of composite cutting edges is defined as Wn, and a chip thickness of the nth group of composite cutting edges is defined as hn, wherein calculation equations of the chip cross-sectional area Sn of the composite cutting edges and the total chip cross-sectional area S of the twist drill are as follows:

a cross-sectional area of single flute single tooth chip is: S1 ... Si ... Sn; wherein:

$$S1 = W1 \times h1;$$

$$Si = Wi \times hi;$$

$$Sn = Wn \times hn;$$

a single flute total cutting area is: $S = S1+...+Si+...+Sn$;
a double flute total cutting area is: $Sz = 2S \approx 2(S1+...+Si+...+Sn)$.
wherein, W1 is a length of the drill tip major cutting edge;
wherein, H1 is a length of the drill tip minor cutting edge;
h1 is a thickness of the chip on the drill tip major cutting edge, and: $H1 >> h1$;
Wi is a length of each major cutting edge of the composite cutting edge;
Hi is a length of each minor cutting edge of the composite cutting edge;
hi is a thickness of the chip on each major cutting edge of the composite cutting edge, and $Hi >> hi$.

EP 3 967 432 A1

straight-line cutting edge

straight-line cutting edges

straight-line cutting edges

Fig. 1

Fig. 2

Fig. 3

direction K

100

Fig. 4

direction K1

$\lambda_{zz}$

143

144

$\lambda_{fz}$

$\alpha_{wz}$

$\alpha_r$

145

133

$\chi_r$

I
enlarged

1411

$\chi_r$

143

145

K₁

144

147

$\chi_r'$

$\lambda_s$

143

144

$\lambda_s'$

1410

1411

142

145

147

144

133

Fig. 5

II

enlarged rotation

K: the initial drilling core thickness at drill tip of the twist drill

$K_1$: the drilling core thickness at drill tip of a highly efficient (composite drill tip) twist drill

$\delta$: drill tip core thickness included angle

Fig. 6

100

Fig. 7

## INTERNATIONAL SEARCH REPORT

| International application No. |
| --- |
| **PCT/CN2020/085178** |

### A.   CLASSIFICATION OF SUBJECT MATTER

B23B 51/02(2006.01)i;   B23B 51/00(2006.01)i

According to International Patent Classification (IPC) or to both national classification and IPC

### B.   FIELDS SEARCHED

Minimum documentation searched (classification system followed by classification symbols)

B23B51

Documentation searched other than minimum documentation to the extent that such documents are included in the fields searched

Electronic data base consulted during the international search (name of data base and, where practicable, search terms used)

CNIKI, CNABS, VEN: 锥, 阶梯, 台阶, 螺旋, 麻花, conical, taper, cone, step, stair, stack, twist, spiral

### C.   DOCUMENTS CONSIDERED TO BE RELEVANT

| Category* | Citation of document, with indication, where appropriate, of the relevant passages | Relevant to claim No. |
| --- | --- | --- |
| PX | CN 110802259 A (SHANGHAI TEC-SPIRAL ENTERPRISES CO., LTD.) 18 February 2020 (2020-02-18)<br>      claims 1-10 | 1-10 |
| X | CN 205551557 U (SHANGHAI TEC-SPIRAL ENTERPRISES CO., LTD.) 07 September 2016 (2016-09-07)<br>      description, paragraphs 0027-0047, figures 5-13 | 1-10 |
| X | CN 202180238 U (SHANGHAI TEC-SPIRAL ENTERPRISES CO., LTD.) 04 April 2012 (2012-04-04)<br>      description, paragraphs [0033]-[0037], and figures 1-4 | 1-10 |
| X | US 2014023445 A1 (MILWAUKEE ELECTRIC TOOL CORPORATION) 23 January 2014 (2014-01-23)<br>      description, paragraphs 0008-0026, figures 1-4 | 1-10 |
| X | JP 5810414 A (SANKI ENG CO., LTD.) 21 January 1983 (1983-01-21)<br>      description, page 1, column 1, paragraph 14 - page 2, column 2, paragraph 20 | 1-10 |

☐ Further documents are listed in the continuation of Box C.         ☑ See patent family annex.

| | |
| --- | --- |
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **15 August 2020** | **03 September 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/085178**

| Patent document cited in search report | | | Publication date (day/month/year) | Patent family member(s) | | | Publication date (day/month/year) |
|---|---|---|---|---|---|---|---|
| CN | 110802259 | A | 18 February 2020 | None | | | |
| CN | 205551557 | U | 07 September 2016 | None | | | |
| CN | 202180238 | U | 04 April 2012 | WO | 2012167448 | A1 | 13 December 2012 |
| US | 2014023445 | A1 | 23 January 2014 | US | 9676041 | B2 | 13 June 2017 |
| | | | | WO | 2014015140 | A1 | 23 January 2014 |
| JP | 5810414 | A | 21 January 1983 | JP | S5810414 | A | 21 January 1983 |

Form PCT/ISA/210 (patent family annex) (January 2015)